(19) **Europäisches Patentamt**

**European Patent Office**

**Office européen des brevets**

(11) **EP 1 327 714 B1**

(12) **EUROPÄISCHE PATENTSCHRIFT**

(45) Veröffentlichungstag und Bekanntmachung des Hinweises auf die Patenterteilung:
**11.05.2005 Patentblatt 2005/19**

(51) Int Cl.⁷: **D06N 7/00**, C09D 5/24, H01B 1/20, H01B 1/22, H05F 3/02

(21) Anmeldenummer: **02000524.5**

(22) Anmeldetag: **09.01.2002**

(54) **Dispersionsmasse für eine hochelastische, emissionsarme Teppichrücken-Beschichtung sowie zum Einsatz als Einkomponenten-Klebstoff**

Dispersion composition for a high elastic, low emission carpet back coating or as a one-component adhesive

Composition de dispersion pour l'enduction de la face envers d'un tapis très élastique et à faible émission ou comme adhésif à un composant

(84) Benannte Vertragsstaaten:
**AT BE CH CY DE DK ES FI FR GB GR IE IT LI LU MC NL PT SE TR**

(43) Veröffentlichungstag der Anmeldung:
**16.07.2003 Patentblatt 2003/29**

(73) Patentinhaber: **Wulff GmbH U. Co.**
**49504 Lotte (DE)**

(72) Erfinder:
• **Dieckmann, Ernst**
**49088 Osnabrück (DE)**

• **Hummelt, Ralf**
**48346 Ostbevern (DE)**

(74) Vertreter: **König, Beate, Dipl.-Phys. Dr.**
**König & Köster,**
**Morassistrasse 8**
**80469 München (DE)**

(56) Entgegenhaltungen:
**EP-A- 0 591 815      EP-A- 0 917 155**
**DE-A- 4 328 108      GB-A- 1 228 249**
**US-A- 5 635 252**

**Beschreibung**

Die Erfindung betrifft eine Dispersionsmasse für eine hochelastische, emissionsarme Teppichrückenbeschichtung. Die Erfindung betrifft außerdem ein Verfahren zum Verlegen von Teppichen.

Teppichböden werden, wie alle anderen Gehkomfortbeläge, auf geeigneten flucht-, lot- und normengerechten, meist gespachtelten, verlegreifen Wand- und Boden-Untergründen geklebt. Lieferbare Breiten von Teppichböden für die Wand-zu-Wand- bzw. Boden-zu-Decken-Verklebung liegen bei 200 cm, 400 cm, 460 cm und 500 cm. Ein Teppichboden besteht im wesentlichen aus folgenden Bestandteilen:

1. Polgrundgewebe (Träger, Rohteppichboden)
2. Vorstrich, herkömmlich auf Basis SBR-Latex
3. Rückenbeschichtung auf Basis SBR-Latex
4. Synthetischer Zweitrücken

In den bekannten Teppichrückenbeschichtungen (für Teppichfliesen) wird in vielen Fällen noch das unter Krebsverursachungsverdacht stehende Bitumen eingesetzt.

Außerdem ist die Geruchs- und Emissionsempfindlichkeit (besonders ist dabei an allergische Reaktionen zu denken) der Nutzer von Teppichböden im Wohn-, Schul-, Krankenhaus- und Hotelbereich sowie in Kulturzentren (Theater, Konzertsäle) sehr groß geworden. Laut der Prof.-Seifert-Studie "Indoor-Air-Quality" sollten in einem Innenraum Emissionswerte von max. 300 µg/m$^3$ Raumluft angestrebt werden.

Diese geforderten niedrigen Emissionswerte, die für den Gesamtraum gelten, sind bislang allein durch einen verklebten Bodenbelag nicht einzuhalten, da bereits ein sehr emissionsarmer Teppichboden Emissionen bis zu 300 µg/m$^3$ Raumluft (GuT-Grenzwerte) verursachen kann.

Die oben geforderten niedrigen Emissionswerte nach 10 Tagen Lagerung von max. 300 µg je m$^3$ Raumluft sind bei einem geklebten Bodenbelag bislang nicht einzuhalten gewesen. Selbst ein besonders emissionsarmer Teppichboden verursacht Emissionen im Bereich von 300 bis 500 µg je m$^3$ Raumluft (bitumen-beschichtete Teppichböden erheblich mehr). Hinzu muß noch die Emission aus den Klebstoffen gerechnet werden. Diese liegt in der Regel (auch schon bei schwach emittierenden Produkten) bei 1000 µg je m$^3$ (Startwert) und 300 µg am 10. Tag; vergl. Handbuch der Verlegepraxis für Teppichleger und Teppichverkäufer "Das Verlegen von Teppichböden", herausgegeben von der Teppichgemeinschaft Wuppertal, 1963, sowie das Fachbuch Fischer/Gürke-Lang/Diel "Textile Bodenbeläge", herausgegeben vom Verlag C.F. Müller Heidelberg, 2000, Seiten 76 und 77 (auszugsweise):

- Ursache für dauerhafte geruchliche Innenraumbelastungen ist die Rückenbeschichtung, auf die in vielen Fällen der Textilanteil geklebt ist;

- Stoffe mit einem ausgewiesenen Eigengeruch wie 4-Phenyl-1-cyclohexen, 4-Vinyl-cyclohexen und 2-Ethyl-1-hexanol sind die charakteristischen Emittenten aus dem Styrol-Butadien-Copolymerisat der Rückenbeschichtung textiler Bodenbeläge.

- In Bodenbelägen werden häufig die aromatischen Lösungsmittel Benzol, Toluol, m- und p-Xylol und 2-Ethyltoluol nachgewiesen. Des weiteren sind neben den aromatischen Verbindungen auch Terpenkohlenwasserstoffe, wie alpha-Pinen, beta-Pinen, 3-Caren, Limonen, Eucalyptol, Longifolen und Sesquiterpene, welche als natürliche Inhaltsstoffe weniger dem Teppichboden als vielmehr den zum Verlegen verwendeten handelsüblichen und althergebrachten Klebstoffen zugesetzt sein können, vorhanden.

- Hält der Geruch eines verklebten Teppichbodens länger an bzw. ist er nicht warentypisch, d.h. unangenehm, wird der Teppichboden vom Verbraucher nicht akzeptiert.

Der vorliegenden Erfindung liegt die Aufgabe zu Grunde,

a) eine emissionsarme, dauerelastische, geruchsneutrale Teppichrückenbeschichtung mit niedriger Emissionsrate zu entwickeln;

b) einen Rückenbeschichtungsauftrag von ca. 500 bis 3000 g/m$^2$ der Beschichtungsmasse mit hohen Anteilen an Metalloxiden - vorzugsweise von Eisen(II,III)-oxid (Ferroferrioxid) Fe$_3$O$_4$ als elektrizitätsleitendem Pulver mit < 3 mm Kornfeinheit zur Erzielung eines Durchgangswiderstandes von ca. 10$^8$ Ohm - und/oder Metallpulver /Metallpulverlegierungen, zu schaffen;

c) eine Beschichtungsmasse zu entwickeln, die ein extrem hohes spezifisches Gewicht aufweist, um so eine gute Planlage, Dauerstabilität und Flächenstabilität eines nicht zu verklebenden, selbstliegenden, formstabilen Teppichbodens zu gewährleisten;

d) eine Beschichtungsmasse mit einem geringen Wassergehalt sowie von hoher Flächenstabilität und Dauerelastizität zu schaffen; ferner einen Einkomponenten-Klebstoff aus der neuen Beschichtungsmasse für beschichtete handelsübliche Teppichböden oder andere Bodenbeläge wie Linoleum und Parkett mit einem Wassergehalt von 8 bis max. 18% zu schaffen;

e) durch Einsatz von Metallpulver einen extrem niedrigen organischen Bindemittelanteil und zwangsläufig dadurch auch niedrigste Emissionswerte zu ermöglichen;

f) einen DIN-gerechten Schälwiderstand (bei Textilbelägen) von über 1 N/mm nach DIN 53269 bestimmt (geforderter DIN-Wert beträgt 1 N/mm), zu erzielen.

Die Lösung der oben angegebenen Aufgabe wird mit der in Anspruch 1 angegebenen Dispersionsmasse sowie durch das in Anspruch 7 angegebene Verfahren erzielt.

Bei der Durchführung des erfindungsgemäßen Verfahrens wird die gebrauchsfertig gelieferte Dispersionsmasse werksseitig auf einer Beschichtungsanlage auf den vorbeschichteten Teppichrücken in einer Stärke zwischen 500 - 3000 g/m$^2$ aufgetragen und anschließend in einem Trockenkanal getrocknet und der Teppich verlegt oder mit derselben Dispersionsmasse vollflächig verklebt.

Grundlage für die Wirkungsweise der Beschichtungsmasse gemäß der Erfindung ist der Einsatz einer 40 bis 70 %igen, vorzugsweise 50 bis 60 %igen (Gewicht), dauerelastischen, wässrigen Kunstharzdispersion auf der Basis von Copolymeren von Acrylsäure mit/ohne Acrylnitril und/oder von Co- bzw. Terpolymeren aus

- Vinylacetat, höheren Vinylestern und Ethylen (bevorzugt ca. 50 %ig),
- Vinylacetat, Ethen und Acrylsäureestern,
- Acrylsäureestern und Styrol (bevorzugt ca. 60 %ig) und/oder
- Butadien und Styrol (SBR-Latex, bevorzugt ca. 50 %ig).

Derartige Co- und Terpolymere sind im Handel unter der Bezeichnung "Vinnapas" der Fa. Air Product Polymer, "Acronal" der Fa. BASF, "Synthomer Latex" der Fa. Synthomer, u.a. erhältlich. Das Butadien/Styrol-Copolymerisat kann auch carboxylgruppenhaltig sein.

Zur Herstellung der Dispersionsmassen gemäß der Erfindung werden einer oder einem Gemisch von mehreren der genannten Kunstharzdispersionen Metalloxidpulver und/oder Metallpulver und/oder pulverisierte Metall-Legierungen zugesetzt. Die Kornfeinheit dieser Metalle bzw. Metall-Verbindungen beträgt vorzugsweise < 3 mm. Es können alle Metalltypen verwendet werden. Außerdem werden Verdicker zugesetzt.

Es wird eine Masse mit einem maximalen Wasseranteil von 12 bis 18% erhalten. Bei Einsatz einer Teppich-Latex-Rückenbeschichtung liegt dagegen die Wassermenge bei ca. 25%.

Die erfindungsgemäß verwendete Beschichtungsmasse ersetzt z.B. die Bitumen-Beschichtung. Im Vergleich: Bitumen-Beschichtungen weisen Emissionsraten von > 1000 µg/m$^3$ Raumluft auf (Kammerprüfung). Die gemäß der Erfindung verwendete Formulierung liegt in den Gesamt-Emissionen (je nach eingesetztem Bindemittel) zwischen < 100 µg/m$^3$ bis < 300 µg/m$^3$ Raumluft.

Die erfindungsgemäße Dispersionsmasse führt außerdem zu einer Teppichrückenbeschichtung, die zusätzlich durch die hohe Dichte des Beschichtungsmaterials eine hohe Eigenschwere hat und somit eine gute Flächenstabilität des Teppichbodens gewährleistet. Der so beschichtete Teppichboden braucht nicht mehr verklebt zu werden. Die Dichte einer bisher üblich gewesenen Latexbeschichtung beträgt ca. 0,5 g/cm$^3$ (geschäumt), die Dichte der neuen metallhaltigen Beschichtungsmasse dagegen > 2 g/cm$^3$.

Die Dispersionsmasse gemäß der Erfindung eignet sich auch als Einkomponenten-Klebstoff zum Verkleben von Belägen. Hierzu wird die Dispersionsmasse auf den verlegegeeigneten Untergrund ausgeschüttet, die Masse mit einer gezahnten Spachtel verteilt und durchgekämmt und der bereits rückenbeschichtete Teppich eingelegt und angerieben.

Die folgenden Rezepturen und das Beispiel erläutern die Erfindung:

| Bevorzugte Rezepturen für die Beschichtungsmasse: | |
|---|---|
| 17 bis 50 Gew. % | Kunstharzdispersion (wie beschrieben) mit 40 bis 70 % aktiver Substanz |

(fortgesetzt)

| Bevorzugte Rezepturen für die Beschichtungsmasse: | |
|---|---|
| 50 bis 83 Gew. % | Metalloxid und/oder Metalle/Metall-Legierungen feinpulverisiert (wie beschrieben) aus den Gruppen II, III, IV und/oder VIII des Periodensystems der Elemente - vorzugsweise Ferroferrioxid $Fe_3O_4$, sämtlich mit einer Körnung von < 3 mm |
| 3 bis 6 Gew. % | Verdicker, z.B. Muscovit, Silicate mit ein-, zwei- und bzw. oder dreiwertigen Kationen, Polyacrylate und bzw. oder Cellulosederivate, wie Hydroxyethylcellulose, Methylhydroxycellulose oder Carboxymethylcellulose. |

| Beispiel : | |
|---|---|
| 25 Gew. % | hochelastische, wässrige Kunstharzdispersion von Copolymeren von Acrylsäure mit/ohne Acrylnitril und/oder von Co- bzw. Terpolymeren aus Vinylacetat, höheren Vinylestern und Ethylen, Vinylacetat, Ethen und Acrylsäureestern, Acrylsäureestern und Styrol und/oder Butadien und Styrol (SBR-Latex) |
| 70 Gew. % | feingepulverte Metalloxide, pulverisierte Metalle und/oder Metall-Legierungen, sämtlich mit einer Körnung von < 3 mm, |
| 5 Gew. % | Verdicker, z.B. Muscovit oder Silicate mit ein-, zwei- und bzw. oder dreiwertigen Kationen |
| 100 Gew. % | Beschichtungsmasse mit ca. 10 % Wasseranteilen. |

Die Dispersionmasse wird auf einer werksseitigen Beschichtungsanlage in einer Menge von etwa 800 bis 1000 g/m² Dispersionsmasse als dauerelastische Teppichrückenbeschichtung aufgerakelt. Der so beschichtete Teppich mit der ausgehärteten Teppichrückenbeschichtung wird auf einen verlegereifen Untergrund formstabil und selbstliegend ausgelegt oder geklebt.

Die Erfindung betrifft somit eine Dispersionsmasse zur Herstellung einer emissionsarmen Teppich-Beschichtung, bestehend aus dauerelastischen Kunstharz-Dispersionen auf Basis wässriger Copolymer-Dispersionen auf Acrylsäure- bzw. Acrylat-Basis mit/ohne Acrylnitril und/oder auf der Basis von Co- bzw. Terpolymeren aus Vinylacetat/ höheren Vinylestern/Ethylen, aus Vinylacetat/Ethylen/Acrylsäureestern, aus Acrylsäureestern/Styrol und/oder aus (ggf.carboxylgruppenhaltigem) Butadien/Styrol (SBR-Latex) in Kombination mit hohen Anteilen feinpulverisierten (vorzugsweise < 3 mm) Metalloxiden, pulverisierten Metallen und/oder Metall-Legierungen und mit Verdickern sowie ein Verfahren, bei dem man die Masse in einer Beschichtungsanlage auf den Teppich-Rücken aufrakelt und nach Auftrocknung der flexiblen, trockenen Teppich-Rückenbeschichtung den so erstellten Teppichboden mit hoher Flächenstabilität und selbstliegend auslegt oder mit der gleichen Rückenbeschichtungsmasse den so behandelten Teppichboden vollflächig verklebt.

**Patentansprüche**

1. Dispersionsmasse zur Herstellung einer emissionsarmen, dauerelastischen Teppichrücken-Beschichtung oder zum Verkleben eines Teppichs, bestehend aus

    17 bis 50 Gew. % einer dauerelastischen 40- bis 70 %igen (Gewicht) wäßrigen Kunstharzdispersion,

    50 bis 83 Gew. % elektrizitätsleitender, pulverisierter, Metalloxide, Metalle und/oder Metall-Legierungen sowie

    3 bis 6 Gew. % Verdicker.

2. Dispersionsmasse nach Anspruch 1, **dadurch gekennzeichnet, daß** die Kunstharzdispersion 40 bis 70 Gew. % eines Copolymeren von Acrylsäure und ggf. Acrylnitril und bzw. oder eines Co- bzw. Terpolymeren aus

    Vinylacetat, höheren Vinylestern und Ethylen,

    Vinylacetat, Ethen und Acrylsäureestern,

    Acrylsäureestern und Styrol und/oder

    Butadien und Styrol (SBR-Latex)

enthält.

**3.** Dispersionsmasse nach Anspruch 1 oder 2, **dadurch gekennzeichnet, daß** sie als elektrizitätsleitende, pulverisierte Metalloxide, Metalle und/oder Metall-Legierungen, Metalle bzw. Oxide von Metallen aus den Gruppen II, III, IV und/oder VIII des Periodensystems der Elemente enthält.

**4.** Dispersionsmasse nach einem der Ansprüche 1 bis 3, **dadurch gekennzeichnet, daß** sie die Metalloxide, Metalle oder Legierungen in einer Kornfeinheit von < 3 mm enthält.

**5.** Dispersionsmasse nach einem der Ansprüche 1 bis 4, **dadurch gekennzeichnet, daß** sie Ferroferrioxid $Fe_3O_4$ als Metalloxid enthält.

**6.** Dispersionsmasse nach einem der vorhergehenden Ansprüche, **dadurch gekennzeichnet, daß** sie als Verdicker Muscovit, Silicate mit ein-, zwei- und bzw. oder dreiwertigen Kationen, Cellulosederivate und bzw. oder Polyacrylate enthält.

**7.** Verfahren zum Verlegen von Teppichen, **dadurch gekennzeichnet, daß** man auf einen Rohteppich-Rücken eine Dispersionsmasse gemäß einem der Ansprüche 1 bis 6 in einer Beschichtungsanlage aufrakelt und den beschichteten Teppich nach Auftrocknenlassen der Rückenbeschichtung verlegt und ggf. mit einer Dispersionsmasse gemäß einem der Ansprüche 1 bis 6 als Einkomponenten-Klebstoff auf der Unterlage verklebt.

**Claims**

**1.** Dispersion mass for producing a low-emission, permanently resilient carpet back coating or for gluing a carpet, consisting of
17 to 50 wt.% of a permanently resilient 40 to 70 % (by weight) aqueous synthetic resin dispersion,
50 to 83 wt.% of electrically-conductive, powdered metal oxides, metals and/or metal alloys as well as
3 to 6 wt.% of a thickener.

**2.** Dispersion mass as claimed in Claim 1, **characterised in that** the synthetic resin dispersion contains 40 to 70 wt. % of a copolymer of acrylic acid and
optionally acrylonitrile and/or a copolymer or terpolymer of
vinyl acetate, higher vinyl esters and ethylene,
vinyl acetate, ethene and acrylic acid esters,
acrylic acid esters and styrene and/or
butadiene and styrene (SBR Latex).

**3.** Dispersion mass as claimed in Claim 1 or 2, **characterised in that** it contains metals or oxides of metals selected from the groups II, III, IV and/or VIII of the periodic table of elements as the electrically-conductive, powdered metal oxides, metals and/or metal alloys.

**4.** Dispersion mass as claimed in any one of Claims 1 to 3, **characterised in that** it contains the metal oxides, metals or alloys in a grain fineness of < 3 mm.

**5.** Dispersion mass as claimed in any one of Claims 1 to 4, **characterised in that** it contains ferro-ferric oxide $Fe_3O_4$ as the metal oxide.

**6.** Dispersion mass as claimed in any one of the preceding Claims, **characterised in that** it contains muscovite, silicates having monovalent, divalent and/or trivalent cations, cellulose derivatives and/or polyacrylates as the thickener.

**7.** Method of laying carpets, **characterised in that** a dispersion mass as claimed in any one of Claims 1 to 6 is applied onto an unfinished carpet back by knife coating in a coating apparatus and after the back coating has been allowed to dry the coated carpet is laid and optionally glued onto the substrate by means of a dispersion mass as claimed in any one of Claims 1 to 6 as a single-component adhesive.

**Revendications**

1. Composition de dispersion, destinée à la fabrication d'un revêtement d'envers de tapis à élasticité permanente et à faibles émissions ou au collage d'un tapis, constituée :

   - de 17 à 50 % en poids d'une dispersion aqueuse à 40 à 70 % en poids de résine artificielle, à élasticité permanente,
   - de 50 à 83 % en poids de métaux, d'oxydes de métaux et/ou d'alliages de métaux, électroconducteurs et réduits en poudre,
   - et de 3 à 6 % en poids d'un épaississant.

2. Composition de dispersion, conforme à la revendication 1, **caractérisée en ce que** la dispersion de résine artificielle contient de 40 à 70 % en poids d'un copolymère d'acide acrylique et éventuellement d'acrylonitrile et/ou d'un copolymère ou terpolymère

   - d'acétate de vinyle, d'esters supérieurs de vinyle et d'éthylène,
   - d'acétate de vinyle, d'éthylène et d'esters d'acide acrylique,
   - d'esters d'acide acrylique et de styrène,
   - et/ou de butadiène et de styrène (latex SBR).

3. Composition de dispersion, conforme à la revendication 1 ou 2, **caractérisée en ce qu'**elle contient, en tant que métaux, oxydes métalliques et/ou alliages de métaux, électroconducteurs et réduits en poudre, des métaux ou des oxydes de métaux des groupes II, III, IV et/ou VIII du Tableau Périodique des Eléments.

4. Composition de dispersion, conforme à l'une des revendications 1 à 3, **caractérisée en ce qu'**elle contient les métaux, oxydes de métaux ou alliages de métaux en particules de dimensions inférieures à 3 mm.

5. Composition de dispersion, conforme à l'une des revendications 1 à 4, **caractérisée en ce qu'**elle contient de l'oxyde magnétique de fer $Fe_3O_4$ en tant qu'oxyde métallique.

6. Composition de dispersion, conforme à l'une des revendications précédentes, **caractérisée en ce qu'**elle contient, en tant qu'épaississant, de la muscovite, des silicates à cations monovalents, divalents et/ou trivalents, des dérivés de cellulose et/ou des polyacrylates.

7. Procédé de pose de tapis, **caractérisé en ce que** l'on dépose à la racle, sur l'envers d'un tapis brut, une composition de dispersion conforme à l'une des revendications 1 à 6, dans un appareil d'enduction, et l'on pose le tapis enduit après avoir laissé sécher l'enduit d'envers et, le cas échéant, on le colle sur le support avec une composition de dispersion conforme à l'une des revendications 1 à 6, qui sert de colle monocomposant.